# EUROPEAN PATENT APPLICATION

(11) **EP 1 652 656 A2**
(43) Date of publication of application: **03.05.2006**
(21) Application number: 05110202.8
(22) Date of filing: 31.10.2005
(51) Int. Cl.: B29C 70/74, B60J 10/00, B05C 7/02

(54) **Weather strip and method of manufacturing same**

(30) Priority: 29.10.2004 US 976984
(71) Applicant: NORDSON CORPORATION, Westlake, OH 44145 (US)
(72) Inventor: Bester, John, N6H4W6, London (CA); Budd, Jeffrey, L3T2A2, Thornhill (CA); Fetcenko, Raymond, 44035, Elyria (US); Varga, Leslie, 30040, Cumming (US); Wong, Alex, L3S4A9, Markham (CA)
(74) Representative: Eisenführ, Speiser & Partner

(57) **Abstract**

A method of manufacturing a weather strip (10) includes forming a compressible bulb member (12) having a hollow interior (14). A curable liquid material, such as a thermoplastic hot melt material, is injected into the hollow interior (14). The curable liquid cures into a resilient plug to provide reinforcement to one or more locations along the length of the weather strip.

## Description

This application is a continuation -in-part of PCT Serial No. PCT/US03/33896 filed on October 24, 2003, now pending, which is based on provisional patent application Serial No. 60/422,671 filed on October 31, 2002, now abandoned. The disclosures of each of these prior related applications are hereby fully incorporated by reference herein.

### Field of the Invention

The present invention generally relates to weather strips and, more particularly, methods for reinforcing portions of the weather strip at areas of high stress concentration such as at curves in the weather strip.

### Background of the Invention

Many varieties of weather strips are used, for example, in door, window, and hatch assemblies for sealing the interior of a structure against the elements. For example, in automotive applications, weather strips have been used to seal around the windows, the doors, the trunk and the hood of a vehicle to prevent water and air from entering interior areas of the automobile at these locations. Weather strips of this type are typically extruded from natural or synthetic rubber, such as ethylene -propylene-diene (EPDM) rubber. The extruded weather strip may be cured by heat and then cooled in a water bath prior to being cut to a desired length. Often, the weather strips are configured into a closed loop or other curved shape to fit properly at the desired location, such as between the trunk frame and the trunk lid, or at other locatio ns such as the hood area, door frame, window frame, etc. The weather strip may be permanently thermoformed during the manufacturing process into the desired curved shape to ease the assembly process when the weather strip is later secured to its supporting structure.

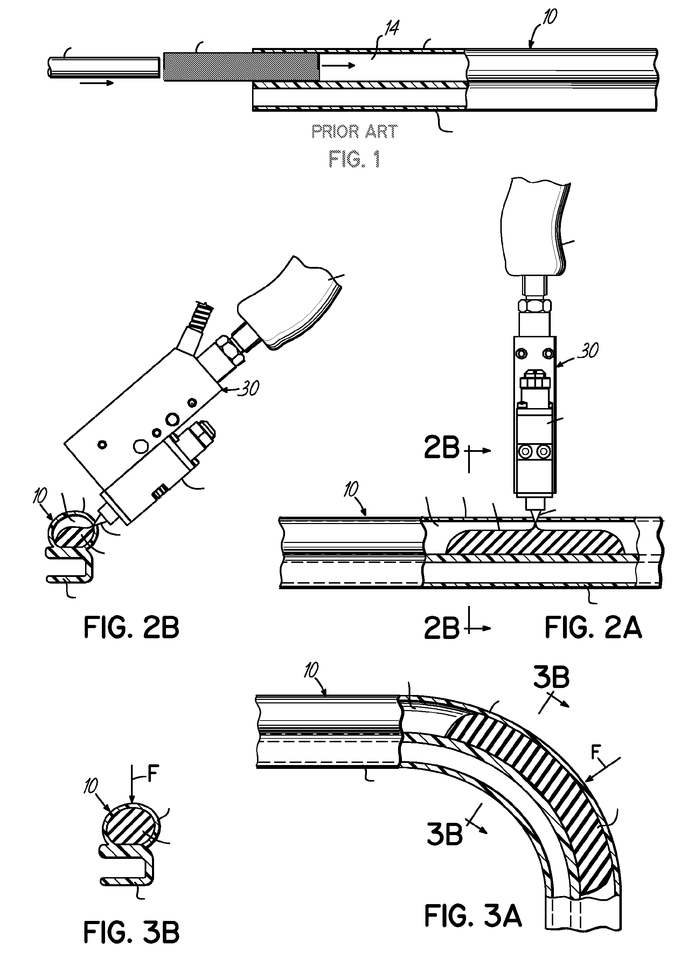

In many cases, it is necessary to reinforce portions of the weather strip, for example, to ensure that the shape and integrity of the bulb member is maintained and does not crease or kink during application to supporting structure, such as a w indow, door, trunk or hood structure. This is especially important at locations having a sharp bending or curving radius since the bulb member is most prone to kink and therefore leak at these locations. Such reinforcement can also ensure adequate sealing performance over long periods of use. As shown in Fig. 1, various types of tubular foam plugs 18 are currently inserted into the hollow interior 14 of a bulb member 12 associated with the weather strip 10. These tubular plugs 18 are usually about 4-8 inches long and are preformed from a relatively rigid, but resilient foam material. The plugs 18 are forced into the hollow interior 14 of bulb member 12 by either a rod 20 or by using pressurized air. These plugs typically increase the force to compress the bulb member 12 by 10N to 30N depending on the application. Fasteners, such as rivets (not shown), may be punched through the weather strip and into the tubular plug to prevent shifting of the plug after insertion. The plugs also may be fastened by other means, such as by structure on the plug itself or through the use of adhesive. Weather strip 10 is secured to supporting structure, such as a window frame, using a U -shaped carrier or channel portion 16. The plugs must be inserted accurately so that they are positioned at the location or locations along the length of the weather strip which will be subjected to higher stress concentrations, such as at the corners of the window frame. To accomplish this, manufacturers may position a clamp at the desired location along the weather strip to function as a stop as the plug is pushed into the hollow interior of the bulb member.

The insertion of resilient, cylindrical foam plugs or resilient tubes into weather stripping generally as described above is a time consuming procedure which therefore increases production costs. Other problems can also arise such as the inaccurate placement of the plug within the weather strip or axial shifting of the plug after insertion due to inadequate fixation thereof within th e weather strip.

To address the above problems as well as other problems in this art, there is a need for a reinforced weather strip and manufacturing method which reduce manufacturing time and costs, while also ensuring optimum sealing performance over the necessary product life.

### Summary of the Invention

In one aspect, the invention generally relates to a method of manufacturing a weather strip generally involving the injection of a curable liquid into the hollow interior of a compressible bulb member. The curable liquid material at least partially cures into a resilient plug within the hollow interior. Preferably, the curable liquid material is a hot melt material. For example, a tool dip like hot melt material may be used which may be a solid structure (i.e., non-foamed) or a foamed structure after curing. This material has been found to provide the necessary combination of compression resistance and resilience during use. Other types of curable materials, such as reactive adhesives, or many other curable materials may be used as long as the material can be cured into the desired resilient plug member.

The liquid material may be injected by first forming a hole in the bulb member and then inserting a injecting member through the hole and into the hollow interior. The hole may be formed by the injecting member itself or preformed by another implement. The compressible bulb member is formed preferably by extruding EPDM. The liquid material is preferably injected only along a portion of the length of the bulb member and, more preferably, at a portion or portions of the length that will experience higher stress concentration or pressure during assembly and/or use, such as at curved locations along the length of the weather strip.

In another embodiment of the invention, the liquid material is directed from an orifice oriented non -perpendicularly to the length of the hollow interior. More specifically, the orifice may be oriented generally parallel to the length of the hollow interior of the bulb member and injected in opposite directions from the injecting member. The bulb member may be at least partially closed in a holder to inhibit outward expansion of the bulb member while injecting the liquid material. The method can further comprise applying comp ression to the bulb member while injecting the liquid material. This would allow the bulb to slightly expand after the material is injected and the compression is released. The invention is further directed to a dispenser and injection system incorporati ng one or more of the features described herein.

The invention further contemplates a weather strip comprising a compressible bulb member having a hollow interior and a resilient thermoplastic material located in the hollow interior. The weather strip can include one or more of the various features and aspects as generally described above.

These and other features and objectives of the present invention will become more readily apparent from the following detailed description taken in conjunction with the accompanying drawings.

### Brief Description of the Drawings

Fig. 1 is an elevational view, partially cross sectioned, illustrating a prior art method of reinforcing a weather strip.

Fig. 2A is an elevational view, partially cross sectioned, illustrating a method of manufacturing a weather strip in accordance with a first embodiment of the invention.

Fig. 2B is a cross sectional view taken along line 2B -2B of Fig. 2A.

Fig. 3A is an elevational view, partially cross sectioned, illustrating a portion of the weat her strip reinforced in accordance with the first embodiment of the invention.

Fig. 3B is a cross sectional view taken along line 3B -3B of Fig. 3A.

Fig. 4 is a view similar to Fig. 2A, but illustrating an alternative embodiment of the invention.

Fig. 5 is a view similar to Fig. 2B, but illustrating a cross sectional view taken along line 5 -5 of Fig. 4.

Fig. 6 is an enlarged view showing the dispensing needle of Fig. 4 partially cross sectioned.

### Detailed Description of Specific Embodiments

Turning to Figs. 2A and 2B, a hot melt adhesive dispensing gun 30 receives thermoplastic hot melt material from a heated hose 32 and dispenses the material 34 through a valve 36 having a discharge portion or injecting member 38. Discharge portion 38 may be constructed so as to pierce bulb member 12 under a sufficiently applied force. Discharge portion 38 may be formed in various manners to allow easier piercing to be accomplished, such as through the use of a needle -shaped discharge portion 38 or a lance or knife -like component coupled to the discharge portion 38. It may also be easier to inject hot melt material 34 at the base of bulb member 12 adjacent to carrier or channel 16. Channel 16 is a relatively rigid component and, therefore, there will typically be more supp ort at this area to allow a puncture to be made. Alternatively, a hole may be preformed through bulb member 12 such that discharge portion 38 simply needs to be inserted through the performed hole prior to injecting hot melt material 34.

Hot melt material 34 is preferably injected along only a portion of the length of weather strip 10 such as along a portion that is or will later be curved as shown in Figs. 3A and 3B. Other areas which represent high pressure points or areas of higher stress concentration may also utilize the principles of this invention. During the injection process, the desired area to be filled with liquid hot melt material 34 may be sealed off on both ends thereof, for example, by applying clamps (not shown) or through other methods. Alternatively, and as illustrated in Fig. 2A, the hot melt material 34 may spread out in both directions upon injection in order to fill the desired length of hollow interior 14 after dispensing for a predetermined time at the appropriate flow rate. The hot melt material 34 may be introduced at one or more locations along weather strip 10 using one or more dispensers such as guns 30. Multiple introduction locations would be necessary to form multiple spaced apart plugs of material, or may be necessary or desirable to form a single relatively long plug of material. Multiple introduction locations may be achieved using the same gun or multiple guns. To provide further structural support for bulb member 12, suitable fixturing may be provided to hold and su pport at least a portion of the outer surface thereof. This would prevent bulb member 12 from expanding diametrically and, as a result, either splitting or lessening the lengthwise movement of hot melt material 34 along bulb member 12.

Once cured as shown in Figs. 3A and 3B, the liquid hot melt material 34 becomes a resilient plug 40 which can receive a significantly higher compression force "F" and offer greater compression resistance than non-reinforced areas of weather strip 10. Preferably, for automot ive applications, plug 40 will increase the force to compress bulb member 12 by about 10N to about 30N, however, this may change depending on the application. The reinforced area is still resilient enough to allow weather strip 10 to properly perform its sealing function over the necessary product life. It has been found that the inventive method of injecting a hot melt material takes only a few seconds as compared to approximately 90 seconds for solid foam plug insertion. Labor cost savings is also sign ificant as a reduction of operators is also realized as a result of the invention. In such applications, a plug length of about 100mm to about 400mm is preferred, however, this may be readily changed based on application needs. The preferred hot melt material is product no. H561 -B of Heartland Adhesive Co., Germantown, WI. However, other foamed or non -foamed thermoplastic materials, such as other hot melt materials, may be used instead. Use of foamed materials may, for example, enable a lower durometer bulb 12.

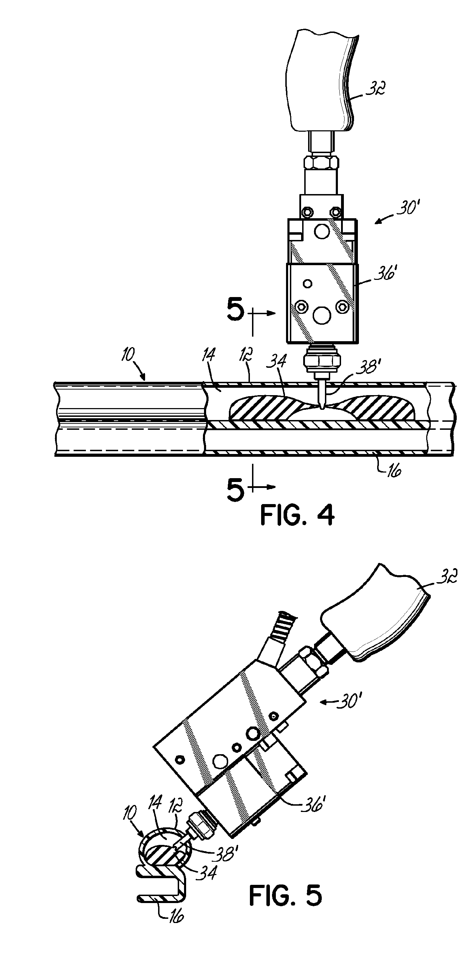

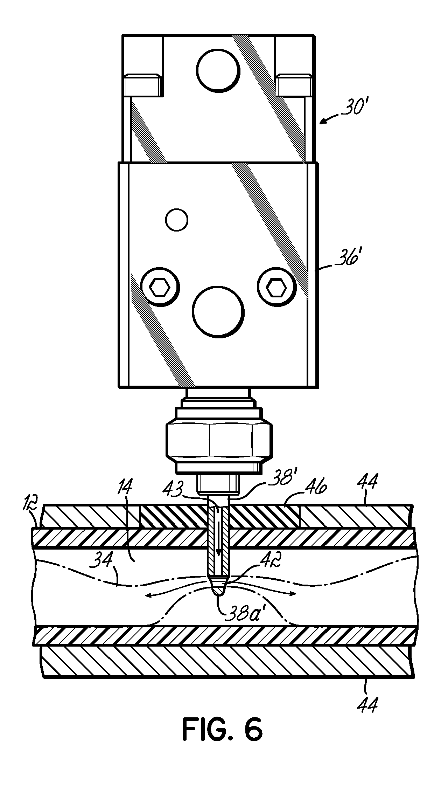

Referring to Figs. 4-6, like reference numerals will be used to indicate like elements of structure relative to the first embodiment, while modified elements of structure are denoted with like numerals having prime marks ('). In this second embodiment, a hot melt adhesive dispensing gun 30' receives thermoplastic hot melt material from a heated hose 32 and dispenses the material 34 through a valve 36' having a discharge portion or injecting member 38' in the form of a needle. The operation of dispensing gun 30' and, more specifically, injecting needle 38', is the same as described above with respect to the first embodiment with the exceptions as described below. Unlike needle 38, needle 38' dispenses thermoplastic material, such as hot melt adhesive, in a nonperpendicular direction relative to the length of the hollow interior 14. In the illustrated embodiment, the injection path is generally parallel to the length of the hollow interior 14 and, more preferably, injection takes place in opposit e directions as shown in Figs. 4 and 6. For this purpose, needle 38' includes an injecting orifice 42 which opens on opposite side wall portions of needle 38' as best shown in Fig. 6. This causes hot melt adhesive 34 to flow in opposite sideward directio ns generally following the length of the hollow interior 14. Optionally, orifice 42 may open on only one side of needle 38' or on more than two sides of needle 38'.

Another feature of the invention illustrated in Fig. 6 is the use of a support or bulb hol der 44, which may be a clamshell type holding member, for at least partially enclosing the section of bulb member 12 to be filled with material 34. Such constraint of bulb member 12 inhibits outward expansion of bulb member 12 as hot melt adhesive 34 is injected. More preferably, support 44 applies slight compression to bulb member 12 so that slight expansion of the bulb member can occur after the bulb member 12 is released from the bulb member 44 after the injection is complete. For example, the bulb me mber 12 may be compressed approximately 20% during the hot melt adhesive injecting step. A sealing flange 46 may be used to seal the injection site and prevent leakage of the hot melt adhesive 34 from the hollow interior 14 during the injecting step. The sealing flange 46 may be formed of a suitable resilient sealing material such as rubber. As with the previous embodiment, needle tip 38a' may be sharpened to an extent that allows needle 38' to be used as a piercing member to pierce through bulb member 1 2. Alternatively, or in addition, a preformed hole in bulb member 12 may be used for at least assisting with the insertion of needle 38'. Injecting members 38, 30' may be heated to assist with piercing bulb member 12.

While the present invention has been illustrated by a description of a preferred embodiments and while these embodiments have been described in some detail, it is not the intention of the Applicant to restrict or in any way limit the scope of the appended claims to such detail. Additional advantages and modifications will readily appear to those skilled in the art. The various features of the invention may be used alone or in numerous combinations depending on the needs and preferences of the user. This has been a description of the present invention, along with the preferred methods of practicing the present invention as currently known. However, the invention itself should only be defined by the appended claims.

Having described the invention, what is claimed is:

## Claims

1. A method of manufacturing a weather strip, comprising:
providing a compressible bulb member having a hollow interior,
injecting a curable liquid material into the hollow interior, and
allowing the curable liquid material to at least partially cure into a resilient plug within the hollow interior.

2. The method of claim 1, wherein the curable liquid material is a liquid thermoplastic material.

3. The method of claim 2, wherein the liquid thermoplastic material comprises a hot melt material.

4. The method of claim 1, wherein injecting the liquid thermoplastic material further comprises:
forming a hole in the bulb member, and
inserting an injecting member through the hole and into the hollow interior.

5. The method of claim 4, wherein providing the compressible bulb member further comprises extruding the compressible bulb member.

6. The method of claim 4, further comprising:
using the injecting member to pierce the hole in the bulb member.

7. The method of claim 1, wherein the bulb member has a length and the liquid material is injected along only a portion of the length.

8. The method of claim 1, further comprising:
forming the bulb member into a curved shape at the location of the resilient plug.

9. The method of claim 1, wherein the weather strip includes a carrier member coupled to a base of the bulb member, and the method further comprises:
injecting the liquid material at the base of the bulb member.

10. The method of claim 1, w herein the hollow interior has a length and injecting the liquid material further comprises:
directing the liquid material from an orifice oriented non - perpendicularly to the length of the hollow interior.

11. The method of claim 10, wherein the orifice is oriented generally parallel to the length of the hollow interior.

12. The method of claim 1, wherein the liquid material is injected in opposite directions from an injecting member.

13. The method of claim 10, further comprising:
at least partially enclosing the bulb member in a holder to inhibit outward expansion of the bulb member during the injecting step.

14. The method of claim 1, further comprising:
applying compression to the bulb member while injecting the liquid material.

15. A weather strip comprising:
a compressible bulb member having a hollow interior, and
a resilient thermoplastic material located in said hollow interior.

16. The weather strip of claim 15, wherein said resilient thermoplastic material comprises a hot melt material.

17. The weather strip of claim 15, wherein said compressible bulb member further comprises an extruded rubber material.

18. The weather strip of claim 17, wherein said extruded rubber material comprises EPDM and said resilient thermoplastic material comprises a solid hot melt material.

19. The weather strip of claim 15, wherein said bulb member has a length and said resilient thermoplastic material is located along only a portion of said length.

20. The weather strip of claim 15, wherein s aid bulb member includes at least one curve extending along said length and said resilient thermoplastic material is located at said curve.

21. A dispenser for injecting a curable liquid material into a compressible bulb member having a hollow interior with a lengthwise extent, the dispenser comprising:
a dispensing valve; and
an injecting member operatively coupled to said valve, said injecting member including a passageway for receiving the curable liquid material from said valve, said passageway having a length and an outlet orifice communicating with said passageway, said outlet orifice extending in a direction transverse to said length such that when said injecting member is inserted into the compressible bulb member in a direction transverse to said lengthwise extent, said outlet orifice extends non -perpendicularly to the lengthwise extent of the hollow interior.

22. The dispenser of claim 21, wherein said outlet orifice extends across said injecting member and opens on opposite sides thereof to dispense the curable liquid material generally in opposite directions along the lengthwise extent of the hollow interior.

23. The dispenser of claim 22, wherein said injecting member includes a tip located distally from said outlet orifice and said tip is sharpened to at least assist with insertion of the injecting member into the bulb member.

24. The dispenser of claim 21, further comprising a seal surrounding said injecting member for preventing leakage of the curable liquid material from the hollow interior.

25. A system for injecting a curable liquid material into a compressible bulb member having a hollow interior with a lengthwise extent, the system comprising:
a dispensing valve;
an injecting member operatively coupl ed to said valve, said injecting member including a passageway for receiving the curable liquid material from said valve and an outlet orifice communicating with said passageway, said injecting member configured to be inserted into a section of the compressible bulb member in a direction transverse to said lengthwise extent with said outlet orifice in communication with the hollow interior; and
a bulb holder for at least partially enclosing the section of the compressible bulb member receiving said inject ing member and preventing undesired expansion of said section while injecting the curable liquid material along the lengthwise extent of the hollow interior.

26. The system of claim 25, wherein said bulb holder is configured to apply compression to said compressible bulb member.
